# EUROPEAN PATENT APPLICATION

(11) **EP 1 286 547 A1**
(43) Date of publication of application: **26.02.2003**
(21) Application number: 01306818.4
(22) Date of filing: 09.08.2001
(51) Int. Cl.: H04N 7/15

(54) **Broadband media distribution system**

(71) Applicant: iPoint Media Ltd., Givat Shaul, Jerusalem 91344 (IL)
(72) Inventor: Avraham, Sless, Even Yehuda 40500 (IL); Avraham, Kanetti, Jerusalem 96920 (IL)
(74) Representative: White, Duncan Rohan

(57) **Abstract**

A system for distributing video and data over broadband packet switching networks. H.323 call establishment procedures are used to connect end points on the network, being terminals of presenters or viewers. In a H.323 proxy server of the system, ports of presenters information streams are opened, and receiving ports of viewers are opened. Video information streams from presenters are replicated and redirected as controlled by the control interface, to viewer ports. Audio information of presenters is likewise replicated and redirected to ports of viewers as controlled by the control interface.

## Description

### FIELD OF THE INVENTION

The present invention relates to broadband interactive video and audio communications over packet switching networks. More specifically, the invention provides a means for implementing interactive video and audio over the Internet.

### BACKGROUND OF THE INVENTION

The H.323 is endorsed by the ITU as a general recommendation for implementing audio, video and data communications over IP networks. In the following specification, a reference is being made to the International Telecommunication Union, Telecommunication Standardization Sector, visual telephone systems and equipment for local area networks which provide a non-guaranteed quality of service, draft H.323 recommendations, May 28, 1996. A reference is also made to the ITU, Telecommunication Standardization Sector, Control Protocol for multimedia communication, H.245, November 2000. The contents of these recommendations and protocol are incorporated herein by reference. The H.323 references many other standards that define the network and functions thereof, required to establish and maintain video and audio communications over IP networks. Specifically, H.323 utilizes the logical channel signaling procedures of H.225.0 and of H.245 for forming the connections of end point in the network. According to the of ITU standard H.245, the contents of each logical channel is described when the channel is opened. In addition to that, under H. 245 provisions are made to express both receiver and transmitter capabilities. The H.323 standard is the most common videoconferencing standard, that together with other recommended associated standards provide the essential network definitions and functions for the implementation of the videoconferencing application, which communicates several end - point participants in a video/audio session interactively.

Digital videoconferencing requires broadband channels such as ISDN or xDSL. A codec (Compression/Decompression) device, can be used to compress the audio or video signal and thus get more data for the same available bandwidth. If more then two end - points are involved, a component called MCU (Multipoint Conferencing Unit) is employed. Such a component is implemented either in software or in hardware, and it allows more than one user to be on the screen at one time. Some such commercial devices can show a multiplicity of users simultaneously, whereas others will switch only to the person who is speaking.

Streaming media are Internet and or intranet applications that provide a capability for conveniently communicating video and or audio streams. This technology does not require broad bandwidth communication lines, but it is not interactive.

### BRIEF DESCRIPTION OF THE DRAWINGS

Fig. 1A is a schematic presentation of the network and end - point environment within which the invention is implemented;
Fig. 1B is a schematic assembly of presenters and viewers as end - points of the network according to one embodiment of the invention;
Fig. 2 is chart listing sequentially the phases accomplished in the establishment of a H.323 call between a presenter and the HPS of the invention;
Fig. 3 is chart listing sequentially the logical steps performed in the system of the invention to distribute presenters information streams in accordance with the present invention;
Fig. 4 is a symbolic graphic presentation describing the two kinds of ports opened in the HPS and the logical space between viewers ports and performers ports;
Fig. 5 is a symbolic graphic presentation describing the replication stage of the present invention;
Fig. 6 is a symbolic graphic presentation of the information stream distribution by the HPS of the present invention.

### DETAILED DESCRIPTION OF THE PRESENT INVENTION

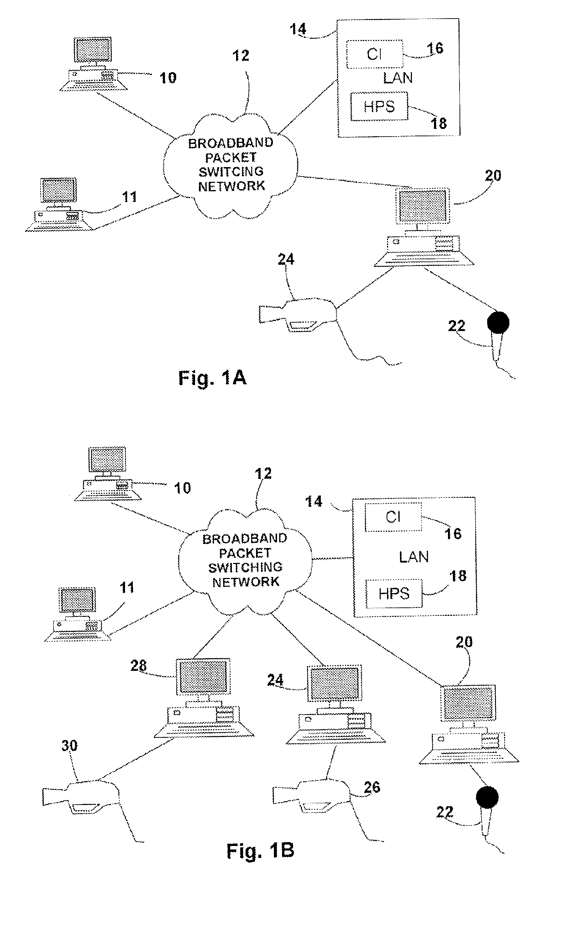

In accordance with the present invention, a viewer connects to a LAN using a broadband connection implementing H.323 communication standard. In **Fig. 1A** to which reference is now made, a schematic presentation is given which describes the structural framework within which the present invention is implemented. Two viewers, a first one using a computer, typically a personal computers (PC) **10**, and a second viewer using another PC **11**, connect each by a suitable computer program to a broadband packet switching network **12**, typically an IP network such as Internet implemented using xDSL access technology, to a LAN **14** of a service provider. Within a computer operative in connection with LAN **14**, two components are employed, a control interface (Cl) **16**, and a H.323 proxy server (HPS) **18**. To the LAN **14** a personal computer (PC) **20** is connected with which a presentation of a presenter takes place. The presenter speaks to a microphone **22** connected to a PC **20**, and concomitantly images of the presenter are acquired by video camera **24**, connected to PC **20**. The acquired audio and video of the presenter are heard and seen respectively by viewers **10** and **11.** Furthermore, In **Fig. 1B**, to which reference is now made, a different embodiment of the present invention is described. In this embodiment, viewer **10** does not get the same service as viewer **11**. In this embodiment, the LAN is connected by means of a network **12** to three presenters, each using a PC as a network terminal. Microphone **22** is connected to PC **20**, a video camera is connected to PC **24**, and a video camera is connected to PC **28**. The three presenters are connected to a broadband packet switching network which may be the same network to which the viewers are connected. In accordance with the present embodiment, viewer **10** acquires the video presentation associated with the presenter at PC **24**, whereas the audio signals that viewer **10** obtains originate in microphone **22** of the presenter using PC **20**. As to the viewer **11**, he or she are getting the same audio signal of the presenter at PC **20**, but the video signal he or she are getting are acquired by camera **30** connected to PC **28**.

### Connecting end - points with the HPS

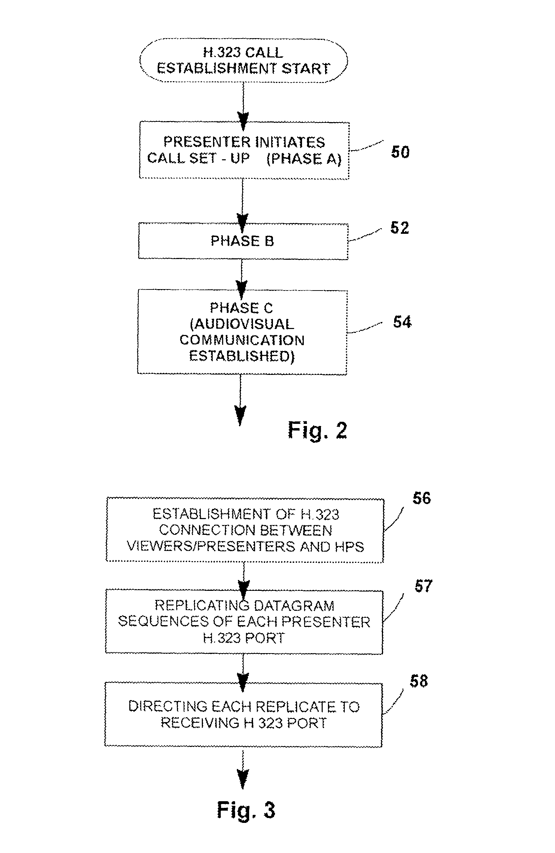

In the present invention, the connection between the end - points of the network and the HPS (H.323 proxy server) is established according to the H.323 standard call establishment requirements. In **Fig. 2** to which reference is now made, the process of end - point connection establishment to the HPS is described as a three step process. In step **50**, procedures under H.225.0 standard recommendations are used for the call set - up, known as phase A of the call establishment process. In step **52**, phase B of the call establishment process is made, in which a H.245 control channel is established, and capability parameters are exchanged. In step **54**, phase C of the call establishment is accomplished, in which audiovisual communication is established, under the provisions of the H.245 standard, and in which logical channels are opened. Logical channels are opened for each type of information stream, such that different datagram are transmitted in different logical channel. The separation of outgoing datagrams into two different logical channels is brought about by parsing the header portion of each datagram, which contains an indication as to the information type, i.e. video or audio in the present invention. The header portion also contain a unique address which uniquely identifies the port in the HPS to which it is destined to arrive. The payload of the datagrams is the information containing part.

The foregoing description of a connection established by a presenter is true for any additional presenter connecting to the HPS. Moreover, any viewer connecting to the HPS, initiates the same cascade of events, and forms thus a H.323 connection with the HPS.

### Distributing audio and video streams

The mechanism of the invention involves three main logical steps. This succession is shown in **Fig. 3** to which reference is now made. In step **56** H.323 connection of viewers and performers are established with the HPS. This step is not necessarily limited in time. Rather, this is a logical step that can continue throughout the session with presenters and viewers establishing calls while others disconnect calls. To demonstrate the invention, however, at least two presenters and at least two viewers must be H.323 - connected to the HPS at any single time in the session. Next, in step **57**, datagram sequences replication of presenters' information streams takes place. Then, in logical step **58** each replicate is directed to a viewer port. The aspects of the present invention implemented outside of the provisions of the H.323 standard are best explained by examples as follows.

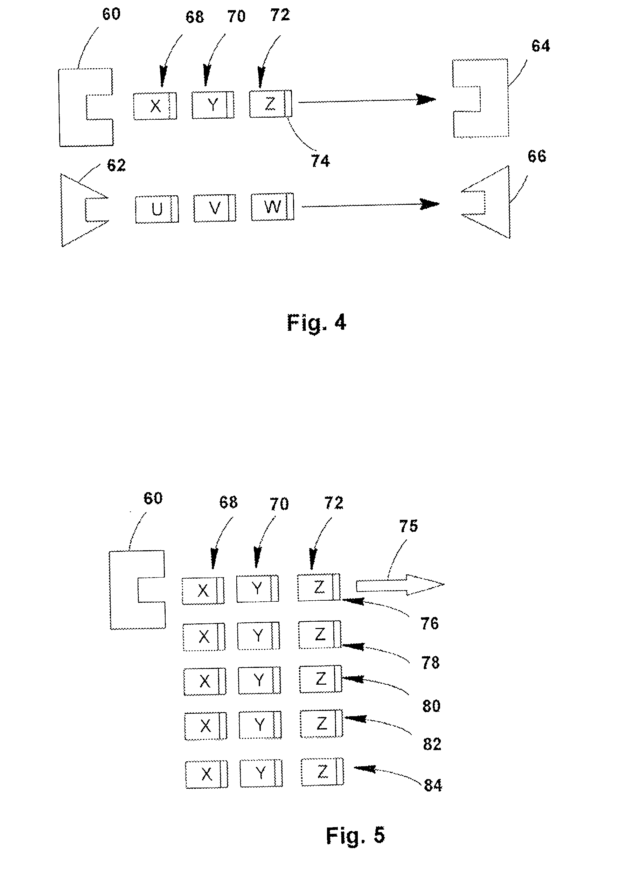

Example 1. Two presenters are connected to the HPS, and three viewers are connected to the same HPS. Presenter A sends a video information stream, and an audio information stream. Presenter B sends audio information stream only. Viewer F receives video of presenter A and audio of presenter A. Viewer G on the other hand, receives video of presenter A and audio of presenter B. Viewer H receives video of presenter A and audio of presenter B. In the present invention two types of ports are opened, for viewers as well as for presenters, namely video ports and audio ports. The distribution of information streams in accordance with the present invention takes place in a logical set - up of the HPS consisting of the H.323 ports of presenters and the H.323 ports of viewers and the logical space in between, as described in a symbolic presentation in **Fig. 4** to which reference is now made. Port **60** is an audio port of a presenter in the HPS, which is uniquely associated with a logical channel of an audio information stream of a presenter. Port **60** has in the HPS a unique address, usually in the form of a number which distinguishes it from all other open ports in the HPS. Port **62** is a video port associated uniquely with presenter, and is uniquely numbered in the HPS. Port **64** is a uniquely numbered audio port opened at the HPS, which is uniquely associated with a viewer. Port **66** is a uniquely numbered video port uniquely associated with a viewer. Datagrams **68, 70** and **72** all consecutive elements representing the audio stream of audio port **60**, uniquely associated with a presenter, each of which contain a header, such as header **74** of datagram **72**. The destination port address is contained within the header of each datagram. Apart from the header, each datagram contains a payload portion. Datagram sequence consisting of datagram **68, 70,** and **72** and other datagrams (not shown) are redirected to audio port **64** associated uniquely with a viewer. Datagram sequence associated with presenter at video port **62** is redirected to video port **66** of a viewer. In the present invention payload is either video or audio information.

In the symbolic presentation of **Fig. 5** to which reference is now made, the replicating step of the invention, is symbolically described. Port **60** is uniquely associated with a logical channel of an endpoint the network, which produces a sequence of datagrams represented by horizontal row of datagrams sequence **76**, consisting of datagrams **70, 72** and **74**. This sequence, representing a presenter's information flow, is replicated several times in a processor, producing identical sequences, namely sequences **78**, **80, 82** and **84**, all having the same datagram order as indicated by arrow **75.** Next, the header of each datagram belonging to a specific sequence, get their header changed, to contain a new destination port address instead of the original one. Changing the target address in the header redirects the datagrams to a viewer, through an appropriate destination port.

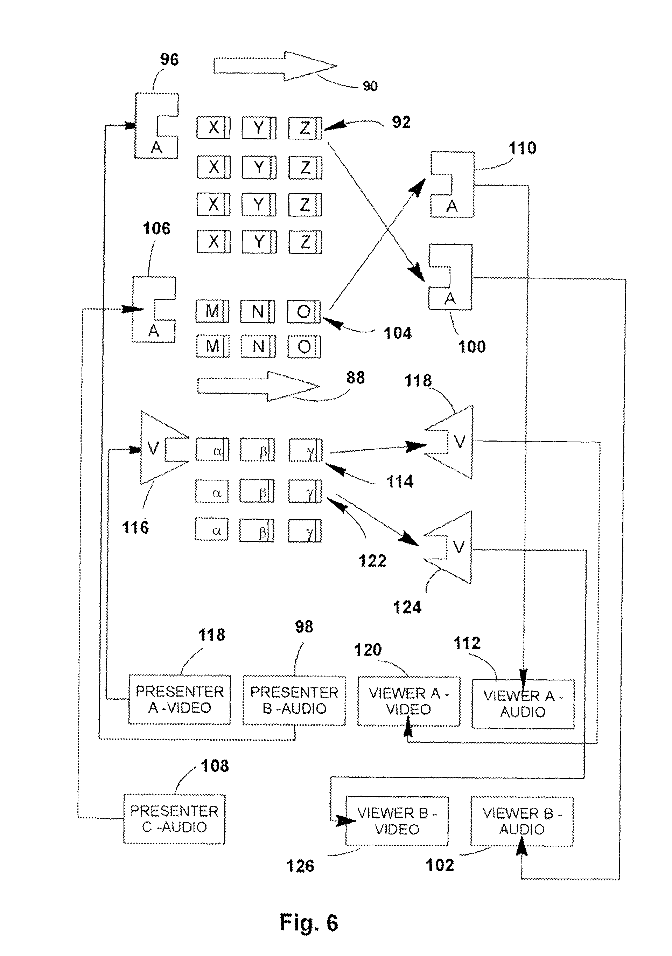

Example 2. This example will next be explained in detail by reference to **Fig. 6**. Datagram sequence are represented symbolically in rows, the direction of which in the graph generally indicated by arrows **88** and **90**. Datagram sequence **92** comes out of audio port **96** of audio channel **98** of presenter B, and is redirected to an audio receiving port **100** of audio channel **102** of viewer B. Datagram sequence (row) **104** coming out of audio port **106** of audio channel **108** is directed to audio receiving port **110** of audio channel **112** of viewer A. Datagram sequence **114** coming out of video port **116** of video channel **118** is directed to video port **120** of video channel **122** of viewer A. Datagram sequence **124**, which is a replicate of sequence **114** coming out of video port **116**, is redirected to video port **124** of video channel **126** of viewer B. Since the number of datagram replicates is virtually limitless, the number of viewers per datagram sequence is likewise limitless, within technical limitations of the hardware.

### Controlling the distribution

The control interface (Cl) is module that accepts directions of the viewers, for example by filling computerized forms which contain parameters that are of significance to the viewers. Thus, for example, a viewer may request to watch a certain football match, with a commentary presented by a specific commentator. The viewer thus constructs a viewer session profile, which is interpreted by the Cl into a connection scheme taking into account all available presenters' characteristics relevant to the session. Based on these, it is determined, typically, what presenter any viewer will see, and what audio the viewer will hear.

The system of the invention is interactive. Under the H.323 connection standard, an end - point can have only one input video and only one audio input. At a point in time an end - point can therefore have only one input information stream of each. The Cl also manages the allocation of interactive connections during a session. In the system of the present invention it is possible that a presenter receives video and or audio of another presenter and that all presenters and viewers receive video and or audio of a session administrator, simultaneously or at different times. To summarise, video and audio are distributed completely independent of one another, and all end - points can be interconnected with the exception that an end - point cannot be connected to itself.

### Usage of the embodiments of the invention

Proposed uses for the present invention are numerous. The embodiments of the present invention provide a system for separating and distributing separated audio and video signals to consumers without the need to invest in high cost hardware and/or software. Viewers watching sports or artistic shows can get simultaneous access, In accordance with the present invention, to interpretations, translations or commentators. The number of viewers and performers is practically limitless and the geographic distribution of meaningful information is virtually simultaneously worldwide. An example of a very large audience making use of the present invention, combined with many presenters is that of world championship in sports such as in the Olympic games. In this case, a certain match takes place at one place at a specific world time, with many hundreds of million watching the event. In this case the number of video presenters is small, typically four cameras, but the number of interpreters functioning as presenters of audio signals in the system of the invention may be numerous, typically several hundreds satisfying the needs of viewers in many languages, personal appeal and the like.

## Claims

1. A system for distributing at least one information stream of at least one end - point of a broadband packet switching network to at least two other end - points of said network, comprising:
• a local area network (LAN) for executing H.323 standard applications;
• a H.323 proxy server (HPS) installed within a computer connected to said LAN, to which are connected said at least three end - points under the provisions of the H.323 standard;
• a control interface (CI) installed in a computer connected over said LAN for managing information stream directions, and
• a broadband packet switching network onto which are connected end - points on said LAN.

2. A system for distributing information streams over packet switching networks as in claim 1, and wherein said at least one information stream is a video information stream or an audio information stream, or both.

3. A method for distributing at least one information stream of at least one end - point on a broadband packet switching network to at least two other end - points on said network, comprising:
• establishing a H.323 connection between each end - point on said network and a H.323 proxy server (HPS), wherein one port is opened in association with each logical channel opened for each information type of each of H.323 connection established;
• replicating datagram sequences of each information stream of a logical channel associated with an opened port, forming at least a number of data sequences as there are receiving ports, and
• redirecting each one of said datagram sequence to a receiving port associated with a logical channel, by redirecting each one of said datagram sequences to a unique receiving port address.

4. A method for distributing information streams of at least one end - point on a broadband packet switching network to at least two other end - points on said network as in claim 3, and wherein said at least one information stream contains video information or audio information, or both.

5. A method for controlling a distribution of video and data streams of at least two presenters among at least one viewer, over broad band packet switching networks, comprising:
• collecting requests of viewers regarding parameters of performers;
• constructing a viewer session profile for evaluating the requests of users, and
• constructing a connection scheme which takes into account said viewer session profile and the characteristics of available presenters.

6. A method for controlling a distribution of video and data streams of at least two presenters to a plurality of viewers, over broadband packet switching networks as in claim 3 and wherein said datagram sequences associated with opened ports represent information streams of presenters.

7. A method for interactively distributing information streams among a multiplicity of end - point on a broadband packet switching network, wherein each one of said end - points can send to all others at all times during a session, one or two information streams, and can except at any time in said session information streams of only one of any other end - points in said session.
